# EUROPÄISCHE PATENTSCHRIFT

(11) **EP 2 274 371 B1**
(45) Veröffentlichungstag und Bekanntmachung des Hinweises auf die Patenterteilung: **25.04.2012**
(21) Anmeldenummer: 09741921.2
(22) Anmeldetag: 27.02.2009
(51) Int. Cl.: C08K 3/00

(54) **POLY(METH)ACRYLIMIDE MIT VERBESSERTEN OPTISCHEN UND FARBEIGENSCHAFTEN, INSBESONDERE BEI THERMISCHER BELASTUNG**
POLY(METH)ACRYLIMIDE HAVING IMPROVED OPTICAL AND COLOR PROPERTIES, PARTICULARLY UNDER THERMAL LOAD
POLY(MÉTH)ACRYLIMIDE AVEC DES PROPRIÉTÉS OPTIQUES ET CHROMATIQUES AMÉLIORÉES, EN PARTICULIER EN CAS DE SOLLICITATION THERMIQUE

(30) Priorität: 09.05.2008 DE 102008001695
(43) Veröffentlichungstag der Anmeldung: 19.01.2011
(73) Patentinhaber: Evonik Röhm GmbH, 64293 Darmstadt (DE)
(72) Erfinder: KHRENOV, Victor, 60323 Frankfurt (DE); SADO, Krzysztof, 55128 Mainz (DE); MEHLER, Nils, 64395 Brensbach (DE); SCHULTES, Klaus, 65193 Wiesbaden (DE); ALBRECHT, Klaus, 55129 Mainz (DE)
(86) Internationale Anmeldenummer: PCT/EP2009/052380
(87) Internationale Veröffentlichungsnummer: WO 2009/135703

(56) Entgegenhaltungen:
- EP-A- 0 576 877
- EP-A- 1 516 711
- WO-A-03/072647
- WO-A-2004/025268
- DE-A1- 10 052 239
- DE-A1- 10 259 674
- DE-A1- 10 340 330
- DE-A1- 19 953 955

## Beschreibung

Die Erfindung betrifft die Herstellung, Verarbeitung und Verwendung von wärmeformbeständigen Thermoplasten, insbesondere von Formmassen auf Basis von imidiertem Polymethylmethacrylat. Sie beschreibt Formmassen, die nach Verarbeitung zu Formkörpern, z. B. für Lichtleiteranwendungen, eine hohe Transparenz (> 90%), niedrigen Haze (< 1%) und nur eine geringe Zunahme des Gelbwertes bei thermischer Belastung aufweisen.

Insbesondere bezieht sich die Erfindung auf ein Verfahren zur Herstellung von Formmassen nach dem Oberbegriff des Anspruchs 1.

Polymere auf Basis von imidiertem Polymethylmethacrylat sind eine eigene Klasse hochtransparenter und dabei besonders wärmeformbeständiger Thermoplaste. Formkörper aus diesem Material können auf Dauer deutlich höheren Temperaturen ausgesetzt werden als Formkörper aus anderen hochtransparenten Thermoplasten wie z. B. Polymethylmethacrylat (PMMA). Naturgemäß steigt durch die höhere thermische Belastung auch die Gefahr der Verfärbung. Um diese Hochleistungs-Thermoplaste einsetzen zu können, z. B. für die Abdeckung von Lampen, ist es notwendig, sie möglichst gegen eine thermische bedingte Verfärbung, sichtbar als eine Zunahme des Gelbwertes, zu schützen. Der Gelbwert wird nach DIN 6167 (D65/10) bzw. nach ASTM D 1925 gemessen.

Für andere Anwendungen, wie beispielsweise als Lichtleiter, ist jedoch diese Beständigkeit gegen Gelbfärbung bei höheren Temperaturen nicht das einzig ausschlaggebende Kriterium. Zwar spielt z.B. bei Lichtleitern die thermische Stabilität (insbesondere die Dauerstabilität) auch eine wichtige, aber im Vergleich zur gleichzeitigen Reduzierung von Gelbwert und Haze, bei zugleich hoher Transparenz, eher untergeordnete Rolle. In diesem Zusammenhang und innerhalb der vorliegenden Anmeldung wird der Haze nach der ISO 14782 (first edition 1999-08-15) bestimmt und die Transparenz wird nach ISO 13468-2 gemessen.

In der RD 321 114 wird ein Verfahren zur Verringerung der Gelbstichigkeit von Polymethacrylimiden beschrieben, indem man die Imidierung in einer sauerstofffreien Atmosphäre durchführt. Die Entfernung des Sauerstoffs ist hier nur durch ein aufwendiges Destillationsverfahren zu erreichen, was wirtschaftlich ungünstig ist.

In der EP-A 576 877 wird ein Polymerisat auf Basis Polymethacryl- und Polyacrylimid mit niedrigem Gelbwert beschrieben, wobei anorganische Salze der Phosphin- oder Phosphorsäure bei der Imidierungsreaktion zugesetzt werden.

Die Imidierungsreaktion besteht in einer Umsetzung eines Polymeren auf Basis von C₁-C₂₀-Alkylresten der Methacrylsäure und/oder der Acrylsäure mit Ammoniak oder einem primären alkylsubstituierten Amin. Sie erfolgt bei hohen Drucken und hohen Temperaturen in Schmelze oder in Lösung. Nach der EP-A 576 877 wird die Phosphorverbindung dem Reaktionsgemisch zugegeben und somit diesen drastischen Bedingungen ausgesetzt. Das Ergebnis ist eine Formmasse, die eine relativ geringe Gelbfärbung aufweist. Bei der Überprüfung dieses Standes der Technik durch die Anmelderin wurde aber gefunden, dass die aus diesen Formmassen hergestellten Formkörper bei thermischer Belastung deutliche Vergilbungserscheinungen zeigen. Sie liegen nur anfangs auf einem niedrigen Niveau bezüglich Gelbwert; mit Fortdauer der thermischen Belastung aber steigt der Gelbwert sukzessive an. Eine Stabilisierungswirkung durch die vorher zugesetzte reduzierende Phosphorverbindung ist hier kaum mehr erkennbar. Es ist daher anzunehmen, dass diese unter den Imidierungsbedingungen weitgehend verbraucht ist oder sich ersetzt hat.

Die Einsatzmengen an den Phosphorverbindungen liegen dementsprechend hoch, vermutlich um einen Wirkungsverlust auszugleichen: Es werden bevorzugt Mengen von 0,1 - 1 Gew.-% bezogen auf die Menge an zu imidierenden Polymeren eingesetzt. Eine Erhöhung der Zusatzmenge kommt kaum mehr in Frage, weil dabei andere Eigenschaften des Polymerisats verschlechtert werden: Es tritt nach den Erkenntnissen der Anmelderin bereits bei einem Zusatz von mehr als 0,1 % Gew.-% der reduzierenden Phosphorverbindung eine Trübung im Polymerisat auf.

Als Indiz für eine Zersetzung der reduzierenden Phosphorverbindung bei dem hier angesprochenen Verfahren mag gelten, dass bei Versuchen der Anmelderin entsprechend EP-A 576 877 die Entwicklung von Phosphin registriert wurde, insbesondere bei hohen Einsatzkonzentrationen. Als eine der hier stattfindenden Zersetzungsreaktionen ist demnach eine Disproportionierung des Hypophosphits anzunehmen.

Aus der gattungsbildenden EP-A 0 776 932 ist die Zugabe von anorganischen Hypophosphiten als Gelbwert reduzierende Stabilisatoren bekannt. Die ausschließlich anorganischen reduzierend wirkenden Phosphorverbindungen werden nicht während der Imidierungsreaktion eingesetzt, sondern nachträglich zum Polymethylmethacrylimid zugesetzt. Die in den Beispielen der EP-A 0 776 932 zur Erreichung der beschriebenen Gelbwerte eingesetzten Mengen an Stabilisator (Natriumhypophosphit) liegen bei 0,5 Gew.-% oder 1 Gew.-%. Bei solch hohen Stabilistaorkonzentrationen besitzt das stabilisierte PMMI allerdings einen vergleichsweise hohen und für eine Reihe von Anwendungen prohibitiven Haze-Wert. So wird aus den Beispielen der EP-A 0 776 932, insbesondere den Beispielen 8 bis 10, ersichtlich, dass mit zunehmendem Gehalt an Natriumhypophosphit auch der Haze zunimmt. Bei einem Gehalt von 2000 ppm werden beispielsweise Haze-Werte von ca. 10 gemessen. Diese sind jedoch für bestimmte Anwendungen (beispielsweise für Lichtleiter) einfach inakzeptabel. Obwohl gemäß der EP-A 0 776 932 stabilisierte Formmassen die Herstellung von Formkörpern ermöglichen, die einen Gelbwert von < 2 oder auch < 1 aufweisen, besteht immer noch ein Bedarf an verbesserten, insbesondere stabileren Formmassen, die neben einem geringen Gelbwert und einer hohen Dauerhaftigkeit der Stabilisierung bei höheren Temperaturen und / oder bei längerer Belastungsdauer auch über einen sehr niedrigen Haze (Trübung) bei hoher Transparenz verfügen.

Der Einsatz von reduzierenden, organischen Phosphorverbindungen als Antioxidantien, die u. a. die Verfärbung von Kunststoff-Formmassen bei thermischer Belastung verhindern sollen, ist bekannt (vgl. beispielsweise Kirk-Othmer, Encyclopedia of Chemical Technology, 3rd. Ed., Vol. 3, Seite 133, Wiley, New York, 1978). Sie werden fallweise auch den Formmassen vor der Verarbeitung, also beim Compoundierschritt zugegeben. So wird gemäß der japanischen Anmeldung Kokai Tokkyo JP 60 123 547 eine Verbesserung der Verfärbung von Copolymerisaten aus Methylmethacrylat-, Styrol- und Maleinsäureanhydrid-Monomereinheiten unter Spritzgussbedingungen bei höheren Temperaturen beobachtet, wenn solche Copolymerisate vor der Verarbeitung durch Spritzguss mit wenigstens einem Phosphaphenanthren-Derivat und zusätzlich einem sterisch gehinderten Phenol, einem Thiopropionsäureester oder einem Phosphorsäureester als Stabilisatoren gegen den oxidativen Abbau versetzt werden.

Jpn. Kokai Tokkyo Koho JP 60 120 735 beschreibt Copolymerisate aus Methylmethacrylat, Vinylaromat und einpolymerisierten cyclischen Anhydriden, denen zur Erhöhung der thermischen Stabilität und zur Vermeidung der Verfärbung solcher Copolymerisate bei thermischer Beanspruchung in der Schmelze, beispielsweise im Spritzguss, Phosphorsäureester und weitere Stabilisatoren auf Basis sterisch gehinderter Phenole zugegeben werden.

In Jpn. Kokai Tokkyo Koho JP 03 167 245 wird die Stabilisierung von Copolymerisaten aus Methylmethacrylat, N-substituierten Maleinimiden und weiteren copolymerisierbaren Monomeren mit Verbindungen, ausgewählt aus der Gruppe der alkylsubstituierten Triarylphosphite, der Dialkylpentaerythroldiphosphite sowie der Phosphaphenanthren-Derivate beansprucht.

Jpn. Kokai Tokkyo Koho JP 63 163 306 umfasst Copolymerisate aus Methylmethacrylat und C₈-C₂₀-Alkylmethacrylat als Kernmaterial für optische Lichtleiterfasern, die als Stabilisatoren Phosphite, wie beispielsweise sterisch gehinderte Diarylpentaerythroldiphosphite oder Thiophosphite zur Vermeidung der Verfärbung der Copolymerisate bei thermischer Belastung enthalten.

In den hier genannten 4 japanischen Patenten sind durchwegs sterisch gehinderte, organische Phosphite genannt oder organische Phosphite zusammen mit sterisch gehinderten Phenolen.

In der JP 010 79 202 wird eine Imidierung von Copolymeren auf der Basis von MMA/Maleinsäureanhydrid offenbart. Es wird darauf hingewiesen, dass die Entgasung des entstandenen Reaktionsprodukts in Gegenwart von Phosphit-Stabilisatoren zu einer Formmasse mit niedrigerem Gelbwert führt.

Die JP 05 070 652 A offenbart den Einsatz von diversen organischen Phosphiten und Phosphoniten als Stabilisatoren bei der Verarbeitung von imidierten Polyacrylaten und Polymethacrylaten. Die entsprechenden Stabilisatoren werden nachträglich in die Polymermatrix durch einen Eincompoundierungsschritt eingearbeitet.

In der EP 463 754 wird beschrieben, dass der Einsatz von Trialkylphosphiten oder aliphatischen bizyklischen Diphosphiten zur Verringerung des Gelbwertes von PMMI führt. Des Weiteren wird angegeben, dass diese Stabilisatoren auch eine Langzeitfarbstabilität von PMMI bewirken.

Die EP 396 336 A offenbart die Verwendung sterisch gehinderter Organophosphite und -phosphonite. Wie in der Patentanmeldung EP 463 754 A 1 wird auch hier die Möglichkeit der Zugabe von Stabilisatoren beim Imidieren erwähnt, allerdings wird nur das nachträgliche Einarbeiten von Stabilisatoren beschrieben.

Schließlich beansprucht die DE 4 219 479 A, dass Hypophosphite bei der Zugabe während der Herstellung eine gelbwertstabilisierende Wirkung aufweisen. Das Patent beschränkt sich aber ausschließlich auf die anorganischen Hypophosphite. Außerdem wird im Patent erwähnt, dass die Zugabe von organischen phosphorhaltigen Stabilisatoren zur Verschlechterung der optischen Eigenschaften (u. a. Gelbwert) führt.

Polymethylmethacrylimid (PMMI) Formmassen zeichnen sich durch eine einzigartige Konstellation von physikalischen Eigenschaften aus und werden für verschiedene spezielle Anwendungen im Kfz- und Optikbereich eingesetzt. Eine Kombination aus hoher Wärmeformbeständigkeit, Transparenz und guter Witterungsbeständigkeit verleihen den PMMI Formmassen eine Sonderstellung auf diesen Marktsegmenten.

Bedingt durch deren hohe Wärmeformbeständigkeit, ist eine sehr hohe Energiezufuhr beim Herstellen (Reaktivextrusion von PMMA) und Weiterverarbeiten von PMMI Formmassen erforderlich. Die durch das Scheren und Aufheizen zu Stande kommende thermische Belastung, der sowohl die Polymermoleküle als auch die Reagenzien (bzw. zu entfernende Nebenprodukte) ausgesetzt sind, führt zu verschiedenen Nebenreaktionen (u. a. Zersetzungsreaktionen). In Folge dessen können diverse ungesättigte Strukturen entstehen, die eine Verschlechterung von optischen Eigenschaften (u. a. Entstehen von Eigenfarbe, Transparenzverluste) verursachen können. Es ist allgemein bekannt, dass bei Definition von Polymercompounds sehr oft diverse Stabilisatoren verwendet werden. Durch deren Einsatz kann die Verschlechterung von Materialeigenschaften verhindert oder kontrolliert werden.

In Anbetracht des hierin angegebenen und diskutierten Standes der Technik bestand eine Aufgabe der vorliegenden Erfindung darin, durch den Einsatz geeigneter Stabilisatoren oder Stabilisierungspakete PMMI Formmassen als auch Formkörper deutlich bezüglich der optischen Werte zu verbessern. Darüber hinaus sollen die guten optischen Eigenschaften auch während des Gebrauchzeitraumes der PMMI Formkörper erhalten bleiben. Des Weiteren sollen die Formmassen der Erfindung durch ein einfaches Verfahren in einem Schritt hergestellt werden können. Speziell war es Aufgabe der Erfindung, den Gelbwert respektive dessen Dauerhaftigkeit so zu verbessern, dass keine störende Trübung in Kauf genommen werden muss.

Diese Aufgaben sowie weitere nicht explizit genannte Aufgaben, die sich jedoch ohne weiteres aus der einleitenden Diskussion ableiten lassen, werden bei einem Verfahren zur Herstellung von Formmassen FM mit verbesserter Farbstabilität bei thermischer Belastung nach dem Oberbegriff des Anspruchs 1 mit den Merkmalen des kennzeichnenden Teils von Anspruch 1 gelöst. Vorteilhafte Verfahrensabwandlungen sind Gegenstand der auf den unabhängigen Verfahrensanspruch rückbezogenen Ansprüche.

Dadurch, dass beim Eingangs genannten Verfahren die Phosphor-Verbindungen organische Phosphor-Verbindungen OP sind, ausgewählt aus der Gruppe bestehend aus den Verbindungen der Formel II 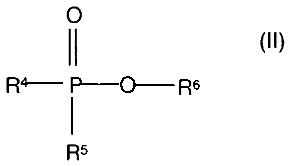 worin R⁴ und R⁵ unabhängig voneinander Wasserstoff oder einem aromatischen 6-gliedrigen Ring bedeuten, der bis zu 5-fach mit einem C₁-C₄-Alkylrest substituiert sein kann, wobei wenigstens einer der Reste R⁴ oder R⁵ nicht Wasserstoff ist, und R⁶ für Wasserstoff oder ein Alkalimetall, Erdalkalimetall, Aluminium oder Ammonium steht, das mit bis zu vier C₁-C₄-Alkyl- und/oder C₅-C₈-Cycloalkylgruppen substituiert sein kann, gelingt es auf nicht ohne weiteres absehbare Weise, farbstabile Formmassen FM bereitzustellen, die über eine ausgezeichnete Dauerhaftigkeit der Farbstabilität auch bei größerer und / oder längerer thermischen Beanspruchung verfügen und die zugleich sowohl einen vorteilhaften Haze und eine hohe Transparenz aufweisen. Dieses Eigenschaftsprofil von PMMI Formmassen ist in seiner Kombination bislang einzigartig.

Das erfindungsgemäße Verfahren umfasst als Schritt a) die Herstellung eines Polymerisat PM auf Basis von Poly-(meth)acrylimid. Das Polymerisat PM enthält Einheiten der Formel I 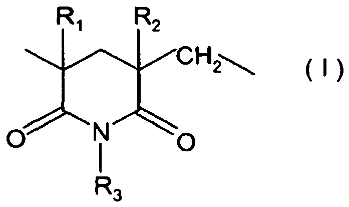 in der R₁ und R₂ für Wasserstoff und Methyl stehen und R₃ Wasserstoff, C₁-C₁₈-Alkyl, C₅-C₈-Cycloalkyl, C₆-C₁₀-Aryl, C₆-C₁₀-Aryl-C₁-C₄-Alkyl bedeutet, wobei diese Reste bis zu 3-fach mit Resten ausgewählt aus der Gruppe bestehend aus C₁-C₄-Alkyl, C₁-C₄-Alkoxy und Halogen substituiert sein können.

Das Verfahren zur Herstellung des Polymerisats PM berührt die vorliegende Erfindung nicht, der diesbezügliche Stand der Technik wird vorausgesetzt. Die Herstellung des Ausgangsproduktes wird z. B. in der DE-A 40 02 904, der EP-A 234 726, der US-A 4 246 374 der US-A 3 246 374 der EP-A 396 336 und der EP-A 576 877 offenbart.

Die in Formel I beschriebene Struktur ist zumindest 5 Gew.-%, bevorzugt zumindest 30 Gew.-%, besonders bevorzugt zu mindestens 60 Gew.-% im Polymerisat enthalten, wobei die Imidgruppe bevorzugt mit Methyl (R₃=Methyl) substituiert ist. Auch R₁ und R₂ in Formel I sind bevorzugt Methylgruppen. Das besonders bevorzugte Polymer enthält demnach (N-Methyl)-dimethylglutarimid-Einheiten. Herstellungsbedingt können im Polymerisat nicht nur Glutarimid-Einheiten, sondern auch geringe Mengen Säure- und Anhydrideinheiten, sowie restliche (Meth)acrylester enthalten sein. Führt man die Imidierung an einem Polymeren aus, das Styrol, alpha-Methylstyrol, Methacrylonitril, Vinylacetat oder andere ethylenisch ungesättigte Comonomere wie Ethylen oder Butadien enthält, so bleiben sie von der Umsetzung unberührt und bilden einen Bestandteil der Polymerzusammensetzung des Ausgangsproduktes PM für das erfindungsgemäße Verfahren.

Die bevorzugten Polymerisate auf Basis Poly-N-Methylmethacrylimid sind besonders wärmeformbeständige Thermoplaste. Ihr Vicat-Wert liegt je nach Methylierungsgrad der Imidgruppe bei 120°C bis über 200 °C. Erstere Werte werden bei geringen Imidierungsgraden um 5 %, letztere bei hohen Imidierungsgraden, wobei nur ein Teil der Substituenten an der Imidgruppe Methylreste sind, erzielt.

Das erfindungsgemäße Verfahren umfasst in Schritt b) die Zugabe einer zur Farbstabilisierung wirksamen Menge einer oder mehrerer reduzierend wirkender Phosphorverbindungen P zum Polymerisat PR, wobei die Phosphorverbindungen P organische Phosphorverbindungen OP sind und die reduzierend wirkenden organischen Phosphorverbindungen OP der Formel II 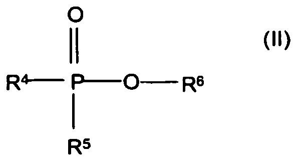 worin R⁴, R⁵ und R⁶ unabhängig voneinander, die hierin weiter oben angegebene Bedeutung annehmen können, gehorchen

Die reduzierend wirkenden organischen Phosphorverbindungen OP enthalten Phosphor in der Oxidationsstufe +1. Technisch leicht zugänglich sind hierbei Salze der Phosphinsäure (Hypophosphite) sowie die freien Säuren selbst. Es wird ausdrücklich darauf hingewiesen, dass es sich hierbei um organische Derivate der Phosphinsäure handelt. Es spielt dabei keine Rolle, ob die Salze oder die freien Säuren in der ortho- oder der meta-Form oder auch z. B. als Dimere vorliegen. Verwendbar sind Alkali-, Erdalkali-, Aluminium- und Ammoniumsalze, wobei das Ammoniumion mit bis zu vier C₁-C₄-Alkyl- und/oder C₅-C₈-Cycloalkylgruppen substituiert sein kann.

Von besonderem Interesse für den Weiterverarbeitungsprozess sind die auf Phosphor (Oxidationsstufe 1) basierenden Stabilisatoren der Formel II, die noch zusätzlich über eine freie P-H Bindung verfügen. Hierzu gehören solche Verbindungen der Formel II, worin R⁴ oder R⁵ Wasserstoff ist. Substanzen solchen Aufbaus sind gegebenenfalls auch als Stabilisatoren für fertige PMMI-Formkörper besonders geeignet.

Von den Verbindungen der Formel (II) sind auch solche von besonderem Interesse, in denen einer der Reste R⁴ oder R⁵ Wasserstoff und der andere Rest ein aromatischer 6-gliedriger Ring, vorzugsweise ein Phenylrest, ist. Die Benzolphosphinsäure hat sich ebenso wie die Salze der Benzolphosphinsäure als besonders wirkungsvoll erwiesen.

In noch einer Abwandlung des Verfahrens der Erfindung haben sich Kombinationen von zwei oder mehreren Verbindungen der Formel II erwiesen. Ein spezielles Verfahren weist vorteilhaft als reduzierend wirkende organische Phosphorverbindung OP Benzolphosphinsäure in Mischung mit Benzolphosphinat-Natrium auf.

Bevorzugt sind auch Kombinationen von Verbindungen der Formel II mit anderen Phosphorverbindungen. So können Kombinationen mit anorganischen oder organischen Phosphiten besonders vorteilige Aspekte ergeben.

Besonders effektiv und auch preisgünstig erhältlich ist Natriumhypophosphit. Seine Verwendung in Kombination mit einer Verbindung der Formel II ist eine bevorzugte Ausführungsform der Erfindung. Obwohl es laut Literatur thermisch leicht unter Disproportionierung zerfällt, hat es sich für die Zwecke der Erfindung gut bewährt.

Stabiler sind Erdalkalihypophosphite, wie z.B. Calciumhypophosphit. Auch die Verwendung dieses Salzes in Kombination mit einer Verbindung der Formel II ist eine besonders bevorzugte Ausführungsform. Es können selbstverständlich auch Salzmischungen eingesetzt werden.

Unerwartet im Vergleich zum Stand der Technik betreffend die Verwendung von reduzierenden anorganischen Phosphorverbindungen ist, dass erfindungsgemäß bereits geringste Konzentrationen davon ausreichen. So werden mit 0.005 Gew.-% bezogen auf das Polymere bereits erkennbare Wirkungen erzielt. Das Maximum an Wirkung kann bereits mit 0.02 bis 0.05 Gew.-% erreicht sein. Meist ist es nicht ratsam, die Konzentration höher als 0,5 Gew.-%, vorzugsweise höher als 0,1 Gew.-% zu wählen. Es ist nicht sinnvoll, mehr als 1 Gew.-% an reduzierender organischer Phosphorverbindung OP zuzusetzen, da hier bereits gewisse Eigenschaftsverschlechterungen beobachtet werden können, wie z.B. eine Trübung im Polymerisat oder eine verschlechterte Witterungsbeständigkeit. Demnach sind Konzentrationen an reduzierend wirkenden organischen Phosphorverbindungen von mindestens 0.005 Gew.-% und weniger als 0,5 Gew.-%, vorzugsweise als 0.1 Gew.-%, bezogen auf polymeres PM, bevorzugt.

Setzt man Mischungen aus organischem Phosphor (I) Verbindungen der Formel II mit anorganischen Phosphorverbindungen, vorzugsweise Hypophosphiten, ein, so kann die eingesetzte Menge über einen weiten Bereich variieren.

Zweckmäßig ist eine Gesamtmenge von Verbindungen der Formel II und anorganischer Phosphorverbindung im Bereich von 0,005 Gew.-% - 1 Gew.-%, wobei das Verhältnis (w/w) von Verbindung der Formel II zu anorganischer Phosphorverbindung im Bereich von 100 : 1 bis > 1 : 1 liegt. Zweckmäßig sind Verhältnisse im Bereich von 5 : 1 bis > 1 : 1.

Die erfindungsgemäßen organischen reduzierenden Phosphorverbindungen OP werden in der Regel in Lösung appliziert. Meist ist Methanol und / oder Ethanol oder ein anderer Alkohol oder ein Alkohol/Wasser-Gemisch als Lösungsmittel am besten geeignet. Vorteilhaft werden die reduzierenden Phosphorverbindungen in möglichst konzentrierter Lösung angewandt. Als Richtweil sei eine Konzentration von 50 Gew.-% genannt. Sie ist bei Raumtemperatur üblich. Je nach Löse- und Applikationstemperatur sind auch andere Konzentrationen möglich bzw. notwendig, z.B. 30 Gew.-% bis 65 Gew.-%. Es ist überraschend, dass selbst ein so geringes Volumen an reduzierendem Agens, wie es eine konzentrierte Lösung der Phosphorverbindung darstellt, offensichtlich über die gesamte Polymercharge homogen verteilt werden kann.

Es ist aber auch möglich, die reduzierende organische Phosphorverbindung in Pulverform, also ohne Verwendung von Lösungsmittel zu applizieren.

Auch wenn es prinzipiell möglich ist, die Komponenten einer Mischung von reduzierenden Phosphorverbindungen nacheinander dem Polymeren zuzugeben, wird man in der Regel zuerst eine Mischung oder Lösung der Komponenten herstellen und diese in einem Schritt dem Polymeren zusetzen. Für die homogene Verteilung ist ein einkomponentiger Stabilisator vorteilhafter.

Auf die Zugabe von Blaupigmenten oder blauen Farbstoffen zur optischen Neutralisation eines allfälligen Gelbstiches kann ohne weiteres verzichtet werden.

Die Einarbeitung der reduzierend wirkenden organischen Phosphorverbindung OP erfolgt erfindungsgemäß zu einem späteren Zeitpunkt der Verarbeitung. Dadurch scheint ein vorzeitiger Zerfall des Entfärbungsmittels vermeidbar zu sein. Es wird vor allem nicht, wie im Stand der Technik, den hohen thermischen Belastungen bei der Imidierung ausgesetzt. Die Zugabe erfolgt keinesfalls in den Reaktionsextruder, auf jeden Fall immer nach der Reaktionszone.

Eine Möglichkeit ist die Einarbeitung der reduzierend wirkenden organischen Phosphorverbindung unmittelbar nach Abschluss der Imidierungsreaktion in den dem Reaktionsextruder nachgeschalteten Entgasungsextruder. Die Dosierstelle wird so gewählt, dass die Zugabe in die bereits entgaste Schmelze erfolgt. Der Vorteil dieser Zugabemethode ist, dass kein zusätzlicher Verarbeitungsschritt notwendig ist und sie sich nahtlos an die Reaktion anschließt.

Eine weitere Möglichkeit ist die Zugabe der reduzierend wirkenden anorganischen Phosphorverbindung zum fertigen Polymerisat beim Compoundieren.

Zur Durchführung dieses erfindungsgemäßen Verfahrens soll das Polymerisat nach Möglichkeit in Teilchenform vorliegen. Geeignet sind z.B. besonders Granulate oder auch Mahlgut in den verschiedensten Mahlgraden. Bevorzugt wählt man eine mittlere Teilchengröße von 1-5 mm. Die Vermischung der reduzierenden organischen Phosphorverbindung mit dem in Teilchenform vorliegenden Polymeren PM erfolgt üblicherweise zunächst in langsam laufenden Mischaggregaten wie beispielsweise Trommel-, Rhönrad- oder Doppelkammerpflugscharmischern. Besonders bevorzugt sind so genannte Cavity-Transfer-Mischer. Die langsam laufenden Aggregate bewirken eine Vermischung, ohne dass die Phasengrenzen aufgehoben werden (vgl. Ullmanns Enzyklopädie der technischen Chemie, 4. Auflage, Bd. 2, Seiten 282 bis 311 Verlag Chemie, Weinheim, New York, 1980). Diese Mischung wird im nachfolgenden Verarbeitungsschritt des Aufschmelzens thermoplastisch aufbereitet. Man verwendet hierzu heizbare Mischaggregate bei den dafür geeigneten Temperaturen, in der Regel zwischen 250 und 350 °C. Beispielsweise sind solche heizbaren Mischaggregate Ein- oder Mehrschneckenestruder oder Extruder mit oszillierender Schnecke sowie gegebenenfalls zusätzlich mit Scherstiften. Mit diesem Verfahren können die erfindungsgemäßen Formmassen FM in Korngrößen von beispielsweise 1 bis 5 mm hergestellt werden.

Eine weitere Zugabevariation besteht darin, das imidierte Poly(meth)acrylat, das bereits in granulierter oder gemahlener Form vorliegt in einem separaten Extruder wieder aufzuschmelzen, und die reduzierend wirkenden organischen Phosphorverbindungen OP der Schmelze zuzusetzen. Sie kann hier z.B. als Lösung eingepumpt werden. Man erhält hier nach Abkühlen und Schneiden ebenfalls die erfindungsgemäße Formmasse FM. Vorteilhaft lässt sich diese Zugabevariation mit einer unmittelbar anschließenden formgebenden Verarbeitung verbinden.

Die erfindungsgemäßen Formmassen FM werden zu Formkörpern FK verarbeitet. Dazu sind gebräuchlichen Verfahren der Technik wie Spritzgießen, Extrudieren, Pressen, Sintern, sowie auch andere Formgebungsverfahren geeignet. Der Gestaltung der Formkörper sind keine Grenzen gesetzt. Entsprechend ihrer hohen Wärmeformbeständigkeit liegt der Schwerpunkt der Anwendung naturgemäß bei Formkörpern, die hohen Temperaturen ausgesetzt sind, wie beispielsweise bei Lichtleiteranwendungen oder Linsen in der Beleuchtungstechnik, sowie bei Formteilen im temperaturbelasteten Bereichen von Kraftfahrzeugen wie bei Scheinwerferstreuscheiben, Rückleuchten oder Nebelleuchten u. a..

Das Verfahren der Einarbeitung der reduzierenden organischen Phosphorverbindung ist in der Regel ein einzelner, einfacher Venahrensschritt, weil das Stabilisierungsmittel als eine Komponente zugesetzt wird. Es ist vorteilhaft, dass in das Herstellverfahren selbst nicht eingegriffen zu werden braucht, da das Polymere ein gängiges Produkt ist und bereits im technischen Maßstabe hergestellt wird. Bezüglich der Menge und der chemischen Natur der reduzierenden organischen Phosphorverbindung OP ist das Verfahren sehr kostengünstig: Es wird nur wenig Stabilisator gebraucht, der besonders preisgünstig ist.

Wichtig sind die anwendungstechnischen Vorteile. So ist der erfindungsgemäße Formkörper nach Durchführung des erfindungsgemäßen Verfahrens praktisch farblos. Sein Gelbwert oder Yᵢ-Gelbindex - er wird nach DIN 6167 (D65/10) bzw. nach ASTM D 1925 gemessen - liegt bei unter 2, bevorzugt unter 1. Probekörper, die nicht in der erfindungsgemäßen Behandlung unterworfen wurden, die also ohne Zugabe von reduzierend wirkenden anorganischen Phosphorverbindungen compoundiert wurden, haben in der Regel Gelbwerte über 3.

Anstelle des Gelbwertes kann auch die Transmission einer spritzgegossenen Scheibe mit den Maßen von 60x45x3 mm zur Charakterisierung der optischen Eigenschaften herangezogen werden. Die Transmission einer erfindungsmäßig hergestellten Scheibe liegt nahe dem theoretischen Wert von 92% Transmission, nämlich bei 86 bis 92% je nach Imidierungsgrad. Bevorzugt sind Werte der Transmission von > 90%, ganz besonders bevorzugt im Bereich von > 90% bis 92%, noch mehr bevorzugt von 90,5% oder im Bereich von 90,5% bis 92%.

Der entscheidende Vorteil des erfindungsgemäßen Verfahrens ist indes die hervorragende Farbstabilität des Formkörpers bei fortdauernder thermischer Belastung in Kombination mit einem hervorragenden Haze bei zugleich hoher Transparenz. Zwar ist eine Zunahme des Gelbwertes nicht immer ganz vermeidbar, aber sie ist in der Regel deutlich geringer als im Stand der Technik. Darüber hinaus verringert die Erfindung eine unerwünschte Zunahme des Haze weitestgehend. Geprüft wird die Farbstabilität eines Formkörpers FK durch eine thermische Belastung einer Prüfscheibe im UmluftTrockenschrank bei 160°C bis zu 1000 Stunden Lagerzeit. In bestimmten Zeitabständen wird der Gelbwert überprüft, wobei eine Kurve der Gelbwertzunahme erstellt werden kann. Erfindungsgemäße Formkörper zeigen eine Gelbwertzunahme im Schnitt nur von <0.02 pro Stunde. Es sind sogar Gelbwertzunahmen von weniger als 0.01 pro Stunde möglich. In Versuchen der Anmelderin - siehe Beispiele - wurden bei einer thermischen Belastung von 160 °C über 800 Stunden Gelbwerte von <1,5, in der Mehrzahl der Fälle <1,0 erreicht.

Die erfindungsgemäßen Formmassen FM finden auch Anwendung bei der Herstellung optisch anspruchsvoller Formteile. Gerade bei besonders langen Fließwegen und/oder komplizierten Formteilgeometrien sind hohe Verarbeitungstemperaturen notwendig. Hier stabilisieren die erfindungsgemäßen, reduzierenden organischen Phosphorverbindungen OP gegen eine Vergilbung des Formteils bei seiner Herstellung.

Gegenstand der Erfindung sind auch Formkörper FK nach einem der Ansprüche 10 - 15. Diese Formkörper FK sind erhältlich aus Formmassen FM, wie sie nach dem vorstehend beschriebenen Verfahren erhältlich sind.

In bevorzugter Ausführungsform kennzeichnet sich ein solcher Formkörper dadurch, dass er einen Gelbwert von <2, bevorzugt <1 aufweist. Der Haze liegt bevorzugt bei < 1,5 %, besonders bevorzugt bei < 1 %.

In vorteilhafter Ausgestaltung ist ein Formkörper der Erfindung dadurch gekennzeichnet, dass er eine Transparenz im Bereich von > 89 % bis 92 %, bevorzugt > 90,5 % bis 92 % aufweist.

Ganz besonders bevorzugt handelt es sich beim Formkörper FK um einen Körper, welcher bei Lichtleiteranwendungen eingesetzt wird, ganz besonders zweckmäßig handelt es sich um einen Lichtwellenleiter.

Nachfolgend wird die Erfindung an Hand von Beispielen und gegebenenfalls Vergleichsbeispielen eingehender erläutert.

Beispiel 1 (Vergleich ohne Stabilisatorzugabe)

Auf einer Reaktionsextrusionsanlage bestehend aus einem Reaktionsextruder mit einem hochwirksamen Mischteil und einem Entgasungsextruder mit zwei Entgasungszonen und angeschlossenen Vakuumleitungen wurde die polymeranaloge Reaktion, nämlich die Imidierung durchgeführt. Pro Stunde wurden in den Reaktionsextruder 10 kg einer PMMA-Formmasse eingebracht. Im ersten Teil der Mischstrecke befindet sich eine Einspeisestelle für Flüssigkeiten. In diese Einspeisestelle wurde als Reaktionsmittel 3.000 g Methylamin pro h zugeführt. Die mittlere Reaktionszeit betrug 5 Minuten bei einer Temperatur von 250 °C. Nach Abschluss der Reaktion wurde die Reaktionsmischung im Entgasungsextruder entspannt, die gasförmigen und flüchtigen Anteile entfernt, und schließlich Stränge extrudiert, die gekühlt und zu Granulat geschnitten wurden.

Von dem erhaltenen Produkt wurde auf einer Spritzgießmaschine Arburg 221 eine Reihe von Probekörpern 65x40x3 mm spritzgegossen und daran der Gelbwert, Transparenz und Haze nach DIN 6167 und ISO 14782 bestimmt. Die nach ISO 306, Verfahren B 50, bestimmte Vicat - Erweichungstemperatur betrug 172,4 °C. Von den spritzgegossenen Probekörpern wurden vier Stück in einen Umluftwärmeschrank gelegt und bei 160 °C 1000 Stunden gelagert. Nach jeweils 144h, 336h, 504 h, 768 h und 1008 h Lagerzeit wurde ein Probekörper entnommen und abgekühlt. Anschließend wurden Gelbwert, Transparenz und Haze gemessen. Es wurden folgende Ergebnisse erhalten:

| Beispiel (Vergleich) | Gelbwert | Transparenz [%] | Haze [%] |
|---|---|---|---|
| 1 | 3,9 | 89,5 | 0,6 |

**Tabelle 1: Warmlagerung bei 160°C ( kein Stabilisator)**

| | | | | | | |
|---|---|---|---|---|---|---|
| Dauer [h] | 0 | 144 | 336 | 504 | 768 | 1008 |
| Gelbwert | 3,9 | 5,48 | 7,73 | 10,85 | 15,93 | 23,91 |
| Transparenz [%] | 89,5 | 89,2 | 88,9 | - | 87 | 85,2 |
| Haze [%] | 0,6 | - | - | - | - | 1,1 |

Man erkennt, dass ohne Stabilisatoren der Gelbwert bereits der nicht gelagerten Proben deutlich zu hoch ist. Allerdings bewegen sich die Werte für Haze und Transparenz noch im akzeptablen Bereich. Bei Warmlagerung steigt der Gelbwert stark an. Auch Transparenz und Haze verschlechtern sich mit zunehmender Dauer der thermischen Belastung der Proben.

### Beispiel 2 (gemäß der Erfindung)

Zugabe eines organischen Hypophosphits zum fertigen PMMI-Granulat.

Es wurde wie in Beispiel 1 verfahren mit dem Unterschied, dass eine 10,4% (Gew. %) methanolische Lösung von benzolhypophosphoriger Säure (BHPS) in den nachgeschalteten Entgasungsextruder mit einer Dosierrate von 0,2KG/h zugegeben wurde. Die Dosierstelle wurde so gewählt, dass die Zugabe in die von flüchtigen und entgasbaren Bestandteilen befreite Schmelze erfolgte. Die Endkonzentration der BHPS in der PMMI-Formmasse betrug 3000 ppm. Von dem erhaltenen Granulat wurden gemäß Beispiel Prüfkörper hergestellt und über eine Zeitdauer von 1000 h bei 160°C thermisch belastet. Es wurden folgende Ergebnisse erhalten:

| Beispiel | Gelbwert | Transparenz [%] | Haze [%] |
|---|---|---|---|
| 2 | 1,1 | 90,6 | 0,8 |

**Tabelle 2: Warmlagerung bei 160°C (organisches Hypophosphit freie Säure)**

| | | | | | | |
|---|---|---|---|---|---|---|
| Dauer [h] | 0 | 144 | 336 | 504 | 768 | 1008 |
| Gelbwert | 1,1 | 1,92 | 2,47 | 3,27 | 5,26 | 7,76 |
| Transparenz [%] | 90,6 | 90,5 | 90,4 | 90 | 89,7 | 89,1 |
| Haze [%] | 0,8 | - | - | - | - | 0,7 |

Man erkennt, dass man durch den Einsatz von benzolhyphophosphoriger Säure gute Transparenz, niedrigeren Haze und Gelbwert erreichen kann. Bei Warmlagerung verändern sich die Werte für die Transparenz und Haze nur unwesentlich. Der Gelbwert steigt zwar an, aber das erreichbare Niveau ist akzeptabel.

Beispiel 3 (gemäß der Erfindung)

Zugabe eines organischen Hypophosphits zum fertigen PMMI-Granulat.

Es wurde wie in Beispiel 2 verfahren mit dem Unterschied, dass eine 8,4% (Gew. %) methanolische Lösung von Benzolhyphophosphoriger Säure Natrium Salz in den nachgeschalteten Entgasungsextruder mit einer Dosierrate von 0,2KG/h zugegeben wurde. Endkonzentration der BHPS Natrium Salz in PMMI-Formmasse betrug 2200ppm.Es wurden folgende Ergebnisse erhalten:

| Beispiel | Gelbwert | Transparenz [%] | Haze [%] |
|---|---|---|---|
| 3 | 0,8 | 90,8 | 0,7 |

**Tabelle 3: Warmlagerung bei 160°C (organisches Hypophosphit Natriumsalz)**

| | | | | | |
|---|---|---|---|---|---|
| Dauer [h] | 0 | 264 | 528 | 768 | 1032 |
| Gelbwert | 0,8 | 2 | 3,57 | 5,98 | 9,02 |
| Transparenz | | | | | |
| [%] | 90,8 | 90,7 | 90,4 | 89,91 | 89,34 |
| Haze [%] | 0,7 | - | - | - | 0,8 |

Man erkennt, dass man durch den Einsatz von benzolhyphophosphoriger Säure Natrium Salz ebenfalls gute Transparenz, niedrigeren Haze und Gelbwert erreichen kann.

Beispiel 4 (Vergleichsbeispiel)

Zugabe eines anorganischen Hypophosphits zum fertigen PMMI-Granulat.

Es wurde wie in Beispiel 2 verfahren mit dem Unterschied, dass eine 3,75% (Gew. %) methanolische Lösung von Natriumhypophosphit in den nachgeschalteten Entgasungsextruder mit einer Dosierrate von 0,08KG/h zugegeben wurde. Die Endkonzentration des Natriumhypophosphits in der PMMI-Formmasse betrug 250 ppm. Es wurden folgende Ergebnisse erhalten:

| Beispiel | Gelbwert | Transparenz [%] | Haze [%] |
|---|---|---|---|
| 4 | 3,2 | 90,3 | 0,7 |

**Tabelle 4 Warmlagerung bei 160°C. (anorganisches Hypophosphit Endkonzentration 1)**

| | | | | | |
|---|---|---|---|---|---|
| Dauer [h] | 0 | 100 | 300 | 700 | 1008 |
| Gelbwert | 3,2 | 4,1 | 5,0 | 10,3 | - |
| Transparenz [%] | 90,2 | 90,2 | 90,0 | 89,0 | - |
| Haze [%] | 0,7 | - | - | 0,89 | - |

Beispiel 5 (Vergleichsbeispiel)

Zugabe eines anorganischen Hypophosphits zum fertigen PMMI-Granulat.

Es wurde wie in Beispiel 2 verfahren mit dem Unterschied, dass eine 3,75% (Gew. %) methanolische Lösung von Natriumhypophosphit in den nachgeschalteten Entgasungsextruder mit einer Dosierrate von 0,26KG/h zugegeben wurde. Die Endkonzentration des Natriumhypophosphits in der PMMI-Formmasse betrug 750 ppm. Es wurden folgende Ergebnisse erhalten:

| Beispiel | Gelbwert | Transparenz [%] | Haze [%] |
|---|---|---|---|
| 5 | 2,2 | 90,4 | 0,9 |

**Tabelle 5 Warmlagerung bei 160°C. (anorganisches Hypophosphit Endkonzentration 2)**

| | | | | | |
|---|---|---|---|---|---|
| Dauer [h] | 0 | 100 | 300 | 700 | 1008 |
| Gelbwert | 2,2 | 3,1 | 4,5 | 8,5 | - |
| Transparenz [%] | 90,4 | 90,3 | 90,0 | 89,3 | - |
| Haze [%] | 0,9 | - | - | 1,3 | - |

Man erkennt bei den Beispielen 4 und 5 (Vergleichsbeispiele), dass Natriumhypophosphit und die PMMI-Schmelze - im Gegensatz zu organischen Stabilisatoren (Beispiele 2 und 3), die eine gute Kompatibilität mit der PMMI-Schmelze aufweisen und sich dadurch homogen auf molekularem Niveau in der Schmelze verteilen lassen - nicht miteinander verträglich sind. Beim Einarbeiten des anorganischen Stabilisators in PMMI bilden sich Kristalle von Natriumhyphophosphit im Polymer. Die dadurch verursachte Lichtstreuung führt dazu, dass die Trübheit (Haze) von Formkörpern zunimmt und deren Anwendung als Lichtleiter verhindern.

Beispiele 6-8 (gemäß der Erfindung) und Beispiele 9-11 (Vergleichsbeispiele)

Nachträgliche Compoundierung von Stabilisatoren

Vom erhaltenen Granulat wurden 15 kg in ein Edelstahlfass von 30 eingefüllt und eine entsprechende Menge an Stabilisatoren eingewogen (s. Tabelle 5 - 6). Die Zugabe von Stabilisatoren erfolgte hier nach Abschluss der Imidierungsreaktion aber vor dem Compoundieren. Auf einem Taumelmischer wurden die Komponenten 4 Minuten innig vermischt und in den Trichter eines 25 mm (= d) Doppleschneckenextruders eingebracht. Auf dem 32 x d langen Doppelschneckenextruder wurde die Mischung compoundiert.

**Tabelle 6: Nachträgliche Stabilisierung von PMMI mit Benzolhypophosphoriger Säure**

| Beispiel | BHPS [ppm] | Transparenz [%] | Gelbwert | Haze [%] |
|---|---|---|---|---|
| 6 | 0 | 88,9 | 6,4 | 1,0 |
| 7 | 1.000 | 89,7 | 2,3 | 1,9 |
| 8 | 1.500 | 89,9 | 1,8 | 1,3 |

**Tabelle 7: Nachträgliche Stabilisierung von PMMI mit Natriumhypophopshit**

| Beispiel | Natriumhypophosphit [ppm] | Transparenz [%] | Gelbwert | Haze [%] |
|---|---|---|---|---|
| 9 | 100 | 89,5 | 3,2 | 2 |
| 10 | 1.000 | 87,8 | 2,9 | 2,5 |
| 11 | 2.000 | 83,5 | 2,9 | 10 |

Anhand der Beispiele 6 bis 8 kann man erkennen, dass eine nachträgliche Stabilisierung von PMMI mit organischen Stabilisatoren zwar dazu führt, dass der Gelbwert abnimmt. Der Haze nimmt jedoch zu, wenn man etwa die Beispiele 2 (3.000 ppm BHPS freie Säure) mit den Beispielen 7 (1.000 ppm BHPS freie Säure) und 8 (1.500 BHPS freie Säure) vergleicht. Daraus kann man schließen, dass es vorteilhaft ist, die Dosierung von Stabilisatoren in den Entgasungsextruder (Beispiele 2 und 3) vorzunehmen.

Aus den Beispielen 9-11 wiederum ist es ersichtlich, dass mit zunehmendem Gehalt an Natriumhypophosphit auch der Haze zunimmt und dass verglichen mit den Beispielen in denen BHPS als Stabilisator eingesetzt wird, der Haze verhältnismäßig schlechter ist.

## Patentansprüche

1. Verfahren zur Herstellung von Formmassen FM mit verbesserten optischen und Farbeigenschaften, umfassend die nachfolgenden Schritte:
a. Herstellung eines Polymerisats PM, welches Einheiten der Formel I 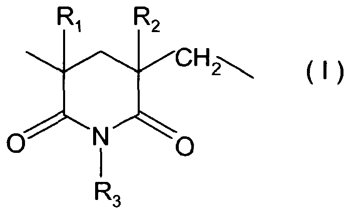 enthält, in der R₁ und R₂ für Wasserstoff und Methyl stehen und R₃ Wasserstoff, C₁-C₁₈Alkyl, C₅-C₈-Cycloalkyl, C₆-C₁₀-Aryl, C₆-C₁₀-Aryl-C₁-C₄-alkyl bedeutet, wobei diese Reste bis zu dreifach mit Resten ausgewählt aus der Gruppe bestehend aus C₁-C₄-Alkoxy und Halogen substituiert sein können,
b. Zugabe einer zur Farbstabilisierung wirksamen Menge einer oder mehrerer
reduzierend wirkender Phosphor-Verbindungen P zum Polymerisat PM,
**dadurch gekennzeichnet, dass** die Phosphor-Verbindungen P organische Phosphor-Verbindungen OP sind, ausgewählt aus der Gruppe bestehend aus den Verbindungen der Formel II 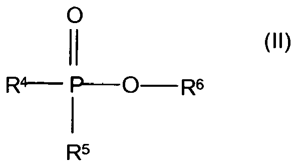 worin R⁴ und R⁵ unabhängig voneinander Wasserstoff oder einen aromatischen 6-gliedrigen Ring bedeuten, der bis zu 5-fach mit einem C₁-C₄-Alkyl und/oder C₅-C₈-Cycloalkylgruppen substituiert sein kann und R⁶ für Wasserstoff oder ein Alkalimetall, Erdalkalimetall, Aluminium oder Ammonium steht, das mit bis zu vier C₁-C₄-Alkyl- und/oder C₅-C₈-Cycloalkylgruppen substituiert sein kann.

2. Verfahren gemäß Anspruch 1, **dadurch gekennzeichnete, dass** die Herstellung des Polymerisats PM in einer an sich bekannten Imidisierungsreaktion in einem Reaktionsextruder erfolgt.

3. Verfahren gemäß Anspruch 1 oder 2, **dadurch gekennzeichnete, dass** die reduzierend wirkende organische Phosphorverbindung OP in einer Menge von 0.005 bis 1 Gew.-%, vorzugsweise unter 0,1 Gew.-% und wenigstens 0.005 Gew.-% bezogen auf das Polymerisat PM zugesetzt wird.

4. Verfahren gemäß Anspruch 1 oder 2, **dadurch gekennzeichnete, dass** die reduzierend wirkende organische Phosphorverbindung OP in einer Menge von 0,3 Gew.-% und wenigstens 0.005 Gew.-% bezogen auf das Polymerisat PM zugesetzt wird

5. Verfahren gemäß Anspruch 1 bis 3, **dadurch gekennzeichnet, dass** die reduzierend wirkende organische Phosphorverbindung OP Benzolphosphinsäure oder Benzolphosphinsäure in Mischung mit Benzolphosphinat-Natrium ist.

6. Verfahren gemäß einem oder mehreren der Ansprüche 1 bis 5, **dadurch gekennzeichnet, dass** die reduzierend wirkende organische Phosphorverbindung in alkoholischer Lösung, vorzugsweise methanolischer und / oder ethanolischer Lösung, zugesetzt wird.

7. Verfahren gemäß einem oder mehreren der Ansprüche 1 bis 6, **dadurch gekennzeichnet, dass** die Zugabe der reduzierend wirkenden organischen Phosphorverbindung OP zu dem in Teilchenform vorliegenden Polymeriat PM durch Vermischen erfolgt, vorzugsweise mit einem Carity-Transfer-Mischer.

8. Verfahren gemäß einem oder mehreren der Ansprüche 1 bis 7, **dadurch gekennzeichnet**, das die Zugabe der reduzierend wirkenden organischen Phosphorverbindung OP in eine von flüchtigen Bestandteilen befreite Schmelze des Polymeren PM erfolgt.

9. Verfahren gemäß Anspruch 8, **dadurch gekennzeichnet, dass** die Zugabe der reduzierend wirkenden organischen Phosphorverbindung OP kontinuierlich in einen dem Reaktionsextruder nachgeschalteten Entgasungsextruder erfolgt.

10. Formkörper FK erhältlich aus Formmassen FM gemäß einem oder mehreren der Ansprüche 1 bis 9.

11. Formkörper FK gemäß Anspruch 10, **dadurch gekennzeichnet, dass** er einen Gelbwert von <2 aufweist.

12. Formkörper FK gemäß Anspruch 11, **dadurch gekennzeichnet, dass** er einen Haze von < 1,5 %, bevorzugt von < 1 % aufweist

13. Formkörper FK gemäß einem der Ansprüche 10 bis 12, **dadurch gekennzeichnet, dass** er eine Transparenz im Bereich von > 89 % bis 92 % aufweist.

14. Formkörper FK gemäß einem der Ansprüche 10 bis 12, **dadurch gekennzeichnet, dass** er eine Transparenz im Bereich von > 90,5 % bis 92 % aufweist.

15. Formkörper FK gemäß einem der Ansprüche 10 bis 14, **dadurch gekennzeichnet, dass** es sich um einen Lichtwellenleiter handelt.

## Claims

1. Process for preparing moulding materials MM with improved optical and colour properties, comprising the following steps:
a. preparation of a polymer PM which contains units of the formula I 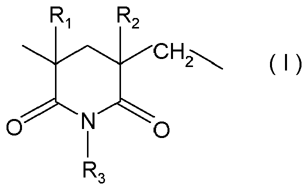 in which R₁ and R₂ are each hydrogen and methyl and R₃ is hydrogen, C₁-C₁₈-alkyl, C₅-C₈-cycloalkyl, C₆-C₁₀-aryl, C₆-C₁₀-aryl-C₁-C₄-alkyl, where these radicals may be up to trisubstituted by radicals selected from the group consisting of C₁-C₄-alkoxy and halogen,
b. addition of an amount of one or more reducing phosphorus compounds P which is effective for colour stabilization the polymer PM, **characterized in that** the phosphorus compounds P are organic phosphorus compounds OP selected from the group consisting of compounds of the formula II 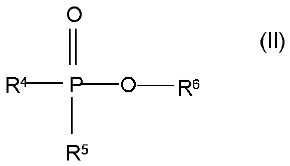 in which R⁴ and R⁵ are each independently hydrogen or an aromatic 6-membered ring which may be up to pentasubstituted by a C₁-C₄-alkyl and/or C₅-C₈-cycloalkyl groups and R⁶ is hydrogen or an alkali metal, alkaline earth metal, aluminium or ammonium which may be substituted by up to four C₁-C₄-alkyl and/or C₅-C₈-Cycloalkyl groups.

2. Process according to Claim 1, **characterized in that** the polymer PM is prepared in an imidation reaction known per se in a reactive extruder.

3. Process according to Claim 1 or 2, **characterized in that** the reducing organic phosphorus compound OP is added in an amount of 0.005 to 1% by weight, preferably below 0.1% by weight and at least 0.005% by weight, based on the polymer PM.

4. Process according to Claim 1 or 2, **characterized in that** the reducing organic phosphorus compound OP is added in an amount of 0.3% by weight and at least 0.005% by weight, based on the polymer PM.

5. Process according to Claims 1 to 3, **characterized in that** the reducing organic phosphorus compound OP is benzenephosphinic acid or is benzenephosphinic acid in a mixture with sodium benzenephosphinate.

6. Process according to one or more of Claims 1 to 5, **characterized in that** the reducing organic phosphorus compound is added in alcoholic solution, preferably methanolic and/or ethanolic solution.

7. Process according to one or more of Claims 1 to 6, **characterized in that** the reducing organic phosphorus compound OP is added to the polymer PM present in particulate form by mixing, preferably with a cavity transfer mixer.

8. Process according to one or more of Claims 1 to 7, **characterized in that** the reducing organic phosphorus compound OP is added to a melt of the polymer PM free of volatile constituents.

9. Process according to Claim 8, **characterized in that** the reducing organic phosphorus compound OP is added continuously to a vented extruder connected downstream of the reactive extruder.

10. Shaped body SB obtainable from moulding materials MM according to one or more of Claims 1 to 9.

11. Shaped body SB according to Claim 10, **characterized in that** it has a yellowness index of < 2.

12. Shaped body SB according to Claim 11, **characterized in that** it has a haze of < 1.5%, preferably of < 1%.

13. Shaped body SB according to any one of Claims 10 to 12, **characterized in that** it has a transparency in the range of > 89% to 92%.

14. Shaped body SB according to any one of Claims 10 to 12, **characterized in that** it has a transparency in the range of > 90.5% to 92%.

15. Shaped body SB according to any one of Claims 10 to 14, **characterized in that** it is a light waveguide.

## Revendications

1. Procédé de fabrication de matériaux de moulage FM à propriétés optiques et de couleur améliorées, comprenant les étapes suivantes :
a. la fabrication d'un polymère PM, qui contient des unités de formule I 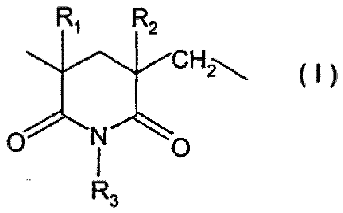 dans laquelle R₁ et R₂ représente hydrogène et méthyle et R₃ signifie hydrogène, alkyle en C₁-C₁₈, cycloalkyle en C₅-C₈, aryle en C₆-C₁₀, aryle en C₆-C₁₀-alkyle en C₁-C₄, ces radicaux pouvant être substitués jusqu'à trois fois avec des radicaux choisis dans le groupe constitué par alcoxy en C₁-C₄ et halogène,
b. l'ajout au polymère PM d'une quantité efficace pour la stabilisation de la couleur d'un ou de plusieurs composés de phosphore P à action réductrice, **caractérisé en ce que** les composés de phosphore P sont des composés de phosphore organiques OP choisis dans le groupe constitué par les composés de formule II 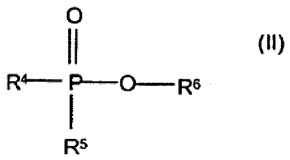 dans laquelle R⁴ et R⁵ signifient indépendamment l'un de l'autre hydrogène ou un cycle aromatique à 6 éléments, qui peut être substitué jusqu'à 5 fois avec des groupes alkyle en C₁-C₄ et/ou cycloalkyle en C₅-C₈, et R⁶ représente hydrogène ou un métal alcalin, un métal alcalino-terreux, aluminium ou ammonium, qui peut être substitué avec jusqu'à quatre groupes alkyle en C₁-C₄ et/ou cycloalkyle en C₅-C₈.

2. Procédé selon la revendication 1, **caractérisé en ce que** la fabrication du polymère PM a lieu dans une extrudeuse de réaction par une réaction d'imidation connue en tant que telle.

3. Procédé selon la revendication 1 ou 2, **caractérisé en ce que** le composé de phosphore organique OP à action réductrice est ajouté en une quantité de 0,005 à 1 % en poids, de préférence inférieure à 0,1 % en poids et d'au moins 0, 005 en poids, par rapport au polymère PM.

4. Procédé selon la revendication 1 ou 2, **caractérisé en ce que** le composé de phosphore organique OP à action réductrice est ajouté en une quantité de 0,3 % en poids et d'au moins 0,005 % en poids, par rapport au polymère PM.

5. Procédé selon les revendications 1 à 3, **caractérisé en ce que** le composé de phosphore organique OP à action réductrice est l'acide benzènephosphinique ou l'acide benzènephosphinique en mélange avec du benzène phosphinate de sodium.

6. Procédé selon une ou plusieurs des revendications 1 à 5, **caractérisé en ce que** le composé de phosphore organique à action réductrice est ajouté dans une solution alcoolique, de préférence une solution méthanolique et/ou éthanolique.

7. Procédé selon une ou plusieurs des revendications 1 à 6, **caractérisé en ce que** l'ajout du composé de phosphore organique OP à action réductrice au polymère PM présent sous forme particulaire a lieu par mélange, de préférence dans un mélangeur à transfert de cavité.

8. Procédé selon une ou plusieurs des revendications 1 à 7, **caractérisé en ce que** l'ajout du composé de phosphore organique OP à action réductrice a lieu dans une masse fondue du polymère PM débarrassée des constituants volatils.

9. Procédé selon la revendication 8, **caractérisé en ce que** l'ajout du composé de phosphore organique OP à action réductrice a lieu en continu dans une extrudeuse à dégazage connectée en aval de l'extrudeuse de réaction.

10. Corps moulé FK pouvant être obtenu à partir de matériaux de moulage FM selon une ou plusieurs des revendications 1 à 9.

11. Corps moulé FK selon la revendication 10, **caractérisé en ce qu'**il présente un indice de jaune < 2.

12. Corps moulé FK selon la revendication 11, **caractérisé en ce qu'**il présente un trouble < 1,5 %, de préférence < 1 %.

13. Corps moulé FK selon l'une quelconque des revendications 10 à 12, **caractérisé en ce qu'**il présente une transparence dans la plage allant de > 89 % à 92 %.

14. Corps moulé FK selon l'une quelconque des revendications 10 à 12, **caractérisé en ce qu'**il présente une transparence dans la plage allant de > 90,5 % à 92 %.

15. Corps moulé FK selon l'une quelconque des revendications 10 à 14, **caractérisé en ce qu'**il s'agit d'une fibre optique.
